(19) Europäisches Patentamt
European Patent Office
Office européen des brevets

(11) **EP 4 230 323 A1**

(12) **EUROPÄISCHE PATENTANMELDUNG**

(43) Veröffentlichungstag:
**23.08.2023   Patentblatt 2023/34**

(21) Anmeldenummer: **22157987.3**

(22) Anmeldetag: **22.02.2022**

(51) Internationale Patentklassifikation (IPC):
**B21D 11/08** (2006.01)       **B32B 15/08** (2006.01)
**B32B 15/20** (2006.01)       **E04F 13/08** (2006.01)
**B29C 53/06** (2006.01)       **E04F 13/12** (2006.01)

(52) Gemeinsame Patentklassifikation (CPC):
**E04F 13/0866; B21D 11/08; B29C 53/063;**
**B32B 3/30; B32B 15/08; B32B 15/20; E04F 13/12;**
B32B 2250/40; B32B 2607/02

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **3A Composites GmbH**
**49090 Osnabrück (DE)**

(72) Erfinder:
• **SPODAR, Vincent**
**78224 Singen (DE)**

• **TIKVES, Yasar**
**78224 Singen (DE)**
• **EMAMI, Amin**
**78224 Singen (DE)**
• **WETZSTEIN, Klaus**
**78224 Singen (DE)**
• **LÜDEKE, Tobias**
**78224 Singen (DE)**

(74) Vertreter: **Patent- und Rechtsanwälte Behrmann**
**Wagner**
**PartG mbB**
**Hegau-Tower**
**Maggistraße 5 (11. OG)**
**78224 Singen (DE)**

(54) **VERFAHREN ZUM ABKANTEN EINES AUS MEHREREN SCHICHTEN BESTEHENDEN LAMINATS**

(57)      Die Erfindung betrifft ein Verfahren zum Abkanten eines Abschnitts (22) eines aus mehreren Schichten bestehenden, plattenförmigen Laminats (10) mit einer Laminatdicke (LD) von einem Basisabschnitt (20) zum Erzielen eines Sollwinkels (β) zwischen dem abgekanteten Abschnitt (22) und dem Basisabschnitt (20), wobei das Abkanten im Bereich einer zwischen dem Abschnitt (22) und dem Basisabschnitt (20) angeordneten, im Wesentlichen V-förmig ausgebildeten Nut (25) mit einem Biegeradius (BR) erfolgt, wobei die Nut (25) durch Materialabtrag im Bereich einer ersten Deckschicht (14) und einer Kernschicht (12) des aus der Kernschicht (12) und die Kernschicht (12) an gegenüberliegenden Seiten von Deckschichten (14, 16) überdeckten Laminats (10) erzeugt wird.

Fig. 1

EP 4 230 323 A1

Fig. 2

Fig. 3

**Beschreibung**

Technisches Gebiet

Die Erfindung betrifft verschiedene Verfahren zum einfachen und präzisen Abkanten wenigstens eines Abschnitts an einem plattenförmigen Laminat, insbesondere zur Ausbildung von Befestigungsabschnitten an einem durch das Laminat gebildeten Flächenelement für ein Wandpanelsystem. Ferner betrifft die Erfindung ein Laminat, das dazu ausgebildet ist, dass wenigstens ein Abschnitt nach dem erfindungsgemäßen Verfahren abgekantet werden kann, ein Wandpanelsystem unter Verwendung von aus einem erfindungsgemäßen Laminat hergestellten Flächenelementen sowie ein Computerprogrammprodukt zum Durchführen von Berechnungen auf Grundlage der erfindungsgemäßen Verfahren.

Stand der Technik

Die Verwendung von aus einem Laminat bestehenden plattenförmigen Flächenelementen zur Verkleidung von Wänden bzw. Außenfassaden von Gebäuden ist beispielsweise aus der nachveröffentlichten DE 10 2018 126 669 A1 der Anmelderin bekannt. Ein derartiges Laminat besteht typischerweise aus einem aus einem thermoplastischen Polymer ausgebildeten Kernbereich oder einem ein thermoplastisches Polymer enthaltendem Kernbereich, der beidseitig mit insbesondere aus Aluminium bestehenden Deckschichten verbunden ist. Ein derartiges Laminat ist unter der Bezeichnung ALUCOBOND® der Anmelderin bekannt. Bei der Verwendung derartiger Flächenelemente als Teil eines Wandverkleidungssystems ist es erforderlich, die Flächenelemente mit Befestigungselementen an der Wand des Gebäudes zu befestigen beziehungsweise zu verankern. Hierzu finden typischerweise aus Kunststoff oder Metall bestehende Befestigungsprofile Verwendung, die einerseits an der Wand des Gebäudes verankerbar sind, und die andererseits formschlüssig in randseitige (Befestigungs-) Abschnitte des Flächenelements eingreifen. Weiterhin werden derartige Flächenelemente üblicherweise in Form von flachen Platten an den Ort der Verwendung, beispielsweise eine Baustelle, angeliefert. Dies dient insbesondere einer kompakten Anordnung der Flächenelemente zum Transport und somit der Verringerung von Transportkosten sowie dem einfacheren Handling zum Transport. Das Abkanten von entsprechenden Abschnitten an randseitigen Bereichen der plattenförmigen Flächenelemente erfolgt typischerweise entweder von Hand, ggf. unter Verwendung eines Hilfswerkzeugs. Dabei werden in dem Laminat geradlinige, nutförmige Ausfräsungen vom Verarbeiter des Laminats ausgebildet, in deren Bereich das Abkanten der Abschnitte von einem (zentralen) Basisabschnitt erfolgt.

Aufgrund des Materialverhaltens beim Abkanten ist die Gewährleistung eines gewünschten, beispielsweise eines senkrechten Winkels zwischen dem Basisabschnitt des Laminats und dem abgekanteten Abschnitt herausfordernd. Dies ist deshalb in der Praxis schwierig durchzuführen, da nach dem Abkanten beziehungsweise Umbiegen des Abschnitts um einen bestimmten Biegewinkel ein elastisches Rückfedern des vom Basisabschnitt abgebogenen Abschnitts derart erfolgt, dass sich der (ursprüngliche) Biegewinkel reduziert. Die Reduzierung des Biegewinkels ist insbesondere abhängig von dem Material und der Dicke der Deckschichten des Laminats.

Neben dem typischerweise gewünschten senkrechten Abkanten eines Abschnitts von einem Basisabschnitt eines Laminats existieren darüber hinaus in der Praxis Wandpanelkonstruktionen, bei denen randseitige Bereiche einen im Wesentlichen U-förmigen Querschnitt aufweisen sollen, bei dem von einem Basisabschnitt zwei, um 90° zueinander abgewinkelte Abschnitte vorgesehen sind. Bei derartigen, im Querschnitt U-förmigen Bereichen besteht darüber hinaus das Bedürfnis, die Höhe des U-förmigen Bereichs, d.h. die Höhe des von dem Basisabschnitt abgewinkelten ersten Abschnitts, möglichst gering auszubilden, da dieses Maß wesentlich die Dicke einer Wandverkleidung bestimmt. Dies ist jedoch mit Blick auf die oben beschriebene Problematik des Rückfederns der beiden Abschnitte mit Blick auf eine geringe Höhe des zweiten Abschnitts schwierig zu realisieren, insbesondere, wenn der parallel zum Basisabschnitt vorgesehene zweite Abschnitt relativ breit ist bzw. eine bestimmte Breite überschreitet.

Offenbarung der Erfindung

Die beiden erfindungsgemäßen Verfahren zum Abkanten wenigstens eines Abschnitts von einem plattenförmigen, aus mehreren Schichten bestehenden Laminats mit den Merkmalen der unabhängigen Ansprüche 1 und 2 weisen den Vorteil auf, dass beide Verfahren intuitiv bzw. für einen Nutzer besonders einfach anwendbar sind, um zwischen einem Basisabschnitt und einem ersten Abschnitt des Laminats einen gewünschten Soll-Winkel bzw. einen im Querschnitt U-förmigen Bereich an einem Laminat mit einer möglichst geringen Dicke, jeweils unter Berücksichtigung des Rückfederverhaltens des Materials des Laminats, auszubilden.

Der Erfindung liegt bei beiden unabhängigen Ansprüchen die (gemeinsame) Idee zugrunde, entweder durch eine vorgegebene Dimensionierung der Nutweite einer im Bereich zwischen den abzukantenden Abschnitten ausgebildeten, im Wesentlichen V-förmigen Nut, oder aber durch einen definierten Abstand zwischen zwei Nuten im Falle des U-förmig abzukantenden Bereichs, jeweils unter Berücksichtigung des Rückfederverhaltens des Laminats, ein Abkanten zu ermöglichen, bei denen sich nach dem elastischen Rückfedern des Materials der bzw. die gewünschten Winkel zwangsläufig ergeben bzw. einstellen.

Weiterhin liegt der Erfindung im Zusammenhang mit den obigen Ausführungen die Erkenntnis zugrunde, dass die in den jeweiligen Berechnungsformeln der erfindungsgemäßen Verfahren verwendeten Biegeradien im Abkantbereich sowie des Rückfederwinkels aus empirischen Versuchsreihen gewonnen bzw. ermittelt werden können.

Aus den obigen Überlegungen ist es daher bei dem ersten erfindungsgemäßen Verfahren zum Abkanten des Abschnitts eines aus mehreren Schichten bestehenden, plattenförmigen Laminats mit einer vorgegebenen Laminatdicke von einem Basisabschnitt zum Erzielen eines Sollwinkels zwischen dem abgekanteten Abschnitt und dem Basisabschnitt vorgesehen, dass das Abkanten im Bereich einer zwischen dem abzukantenden Abschnitt und dem Basisabschnitt angeordneten, im Wesentlichen V- oder U-förmig ausgebildeten Nut mit einem vorgegebenen Biegeradius erfolgt, wobei die Nut durch Materialabtrag im Bereich einer ersten Deckschicht und einer Kernschicht des aus der Kernschicht und die Kernschicht an gegenüberliegenden Seiten von Deckschichten überdeckten Laminats erzeugt wird, wobei das Abkanten durch Umbiegen des ersten Abschnitts um einen Biegewinkel erfolgt, der größer ist als der Sollwinkel, derart, dass die die Nut begrenzenden Bereiche des Materials der ersten Deckschicht auf Anschlag aneinander anliegen, wobei nach dem Abkanten der abgekantete Abschnitt um einen Rückfederwinkel entgegen der Richtung des Biegewinkels rückfedert, und wobei die Nutweite der Nut nach der Formel

$$NW = 2 \times ((LD - (BR - (BR/\sqrt{2}))) \times \tan(\beta/2 + (RFW/2)))$$

berechnet wird, wobei

NW die Nutweite, LD die Laminatdicke, BR der laminatspezifische Biegeradius, $\beta$ der Sollwinkel und RFW der laminatspezifische Rückfederwinkel bedeuten.

Bei dem zweiten erfindungsgemäßen Verfahren zum Abkanten eines im Querschnitt U-förmigen Bereichs bei einem aus mehreren Schichten bestehenden, plattenförmigen Laminat mit einer Laminatdicke ist es vorgesehen, dass von einem Basisabschnitt ein erster Abschnitt und ein zweiter Abschnitt im Bereich zweier parallel zueinander angeordneter, vorzugsweise identisch und im Wesentlichen V- oder U-förmig ausgebildeter Nuten mit einer Nutweite abgekantet werden, wobei die Nuten durch Materialabtrag im Bereich einer ersten Deckschicht und einer Kernschicht des aus der Kernschicht und die Kernschicht an gegenüberliegenden Seiten von Deckschichten überdeckten Laminats erzeugt werden, wobei der zweite Abschnitt mit der dem ersten Abschnitt gegenüberliegenden Kante beim Abkanten gegen die ihn zugewandte Seite des Basisabschnitts in Kontakt gebracht wird, wobei nach dem Abkanten die beiden von dem Basisabschnitt abgekanteten Abschnitte jeweils um einen Rückfederwinkel entgegen der Richtung des ursprünglichen Biegewinkels rückfedern, wobei der von dem Basisabschnitt abgekantete erste Abschnitt und der von dem ersten Abschnitt abgekantete zweite Abschnitt nach dem Rückfedern jeweils um 90° zueinander angeordnet sind, und wobei die Höhe des Querschnitts im Bereich des ersten Abschnitts bei einer gegebenen Breite des zweiten Abschnitts nach der Formel

$$T = 2 \times LD + 2 \times (\sin(RFW) \times (b - LD))$$

berechnet wird, wobei

T die Höhe des Querschnitts im Bereich des ersten Abschnitts, LD die Laminatdicke, RFW der laminatspezifische Rückfederwinkel und b die Breite des zweiten Abschnitts bedeuten.

Vorteilhafte Weiterbildungen der erfindungsgemäßen Verfahren zum Abkanten sind in den Unteransprüchen angegeben.

In der Praxis hat es sich als besonders vorteilhaft erwiesen, die Größe des Rückfederwinkels des Laminats und gegebenenfalls die Größe des Biegeradius aus einer aus empirischen Versuchen erstellten Tabelle zu entnehmen.

Zur Erzeugung der gemischten Nutgeometrie wird ein Formfräser verwendet, der an den jeweiligen spezifischen Anwendungsfall bzw. der Geometrie des Laminats angepasst ist.

Weiterhin umfasst die Erfindung ein Laminat zum Durchführen der erfindungsgemäßen Verfahren, aufweisend eine Kernschicht aus einem thermoplastischen Polymer oder enthaltend ein thermoplastisches Polymer, das an gegenüberliegenden Seiten von jeweils einer aus Metall bestehenden Deckschicht überdeckt ist, und mit wenigstens einer geradlinig ausgebildeten Nut, die einen Basisabschnitt von einem abkantbaren Abschnitt oder im Falle von zwei abzukantenden Abschnitte einen ersten Abschnitt von einem zweiten Abschnitt trennt, wobei die wenigstens eine Nut im Bereich der ersten Deckschicht sowie der Kernschicht ausgebildet ist, wobei die wenigstens eine Nut maximal bis zu dem Bereich der zweiten Deckschicht, vorzugsweise in einem Abstand von der zweiten Deckschicht endend, ausgebildet ist, und wobei die wenigstens eine Nut spiegelsymmetrisch zu einer senkrecht zur Ebene des Laminats verlaufenden Symmetrieebene ausgebildet ist.

Der Kern enthält ein thermoplastisches Polymer, welches mit anorganischen Füllstoffen oder/und Kurzfasern gefüllt sein kann.

Bei Verwendung eines thermoplastischen Polymers besteht der Kern beispielhaft aus Polyethylen, Polypropylen, Polybuten, Polyvinylchlorid, Polyvinylidenchlorid, Polystyrol, Polyethylenterephthalat, Polyamid, Polysiloxan, Polyoxymethylen, Cellulosepolymeren, Polyvinylacetalen, Polyacrylaten und -methacrylaten, Polyethersulfonen, Polyamidimiden, Polyimiden sowie Copolymeren, Blends, funktionalisierten Polymeren, gepfropften Polymeren oder Modifikationen derer.

Der Füllstoff kann beispielsweise aus einem Material auf anorganischer Basis wie Aluminiumhydroxid, Magnesiumhydroxid, Kalk, Leichtfüllstoff wie z.B. Hohlglaskugeln, Blähglas, Perlit, Cenosphären, Calciumborat, Bariumsulfat, Hydrotalcit, rotem Phosphor, Quarzsand, Ammoniumpolyphosphat, Talk, Antimontrioxid, Zinkhydroxystannat, Zinkborat, Böhmit, Calciumhydroxid, Nesquehonit, Hydromagnesit, Huntit, Halloysit, Kaolin, Wollastonit, Eisenoxidhydrat, Blähgraphit, Schichtsilikaten oder Gemischen daraus bestehen. Auch können zusätzlich Additive wie phosphororganische Verbindungen, Melamin, Farbpigmente, halogenierte Verbindungen oder Stabilisatoren vorgesehen sein.

Bevorzugt ist ein Laminat, bei den die beiden Deckschichten aus Aluminium mit einer Schichtdicke zwischen 0,15mm und 1,05mm, insbesondere zwischen 0,2mm und 0,5mm, bestehen.

Weiterhin finden Laminate mit einer Laminatdicke zwischen 1,2mm und 8mm, insbesondere zwischen 2mm und 6mm, Verwendung.

Derartige, soweit beschriebene Laminate weisen beim Biegen einen Biegeradius zwischen 1mm und 3,5mm, insbesondere zwischen 1,5mm und 2,5mm, auf. Wesentlich dabei ist, dass sich dieser Biegeradius ohne weitere Hilfsmittel zwangsläufig aufgrund der Materialeigenschaften bzw. der Schichtdicken der (zweiten) Deckschicht einstellen.

Zuletzt ist es vorgesehen, dass die Nut einen insbesondere flachen oder gewölbten Nutgrund mit einer Nutbreite von 2mm bis 4mm, insbesondere zwischen 2.8 und 3.2mm, aufweist.

Weiterhin umfasst die Erfindung auch ein Wandpanelsystem, aufweisend wenigstens ein plattenförmiges Flächenelement aus einem soweit beschriebenen Laminat und/oder einem nach einem erfindungsgemäßen Verfahren abgekanteten Laminat, wobei das Flächenelement im Bereich des ersten und/oder zweiten Abschnitts mit einem Befestigungselement zur Befestigung an einer Wand formschlüssig verbindbar ist.

Zuletzt umfasst die Erfindung ein Computerprogrammprodukt, insbesondere ein Berechnungsprogramm, zum Durchführen der Berechnung einer erforderlichen Nutweite oder der Geometrie eines im Querschnitt U-förmigen Bereichs nach einem soweit beschriebenen erfindungsgemäßen Verfahren, wobei das Computerprogrammprodukt einen Algorithmus zur Durchführung der laminatspezifischer Berechnungen und einen Datenspeicher mit laminatspezifischen Werten, insbesondere des Rückfederwinkels und/oder des Biegeradius, aufweist.

Weitere Vorteile, Merkmale und Einzelheiten der Erfindung ergeben sich aus der nachfolgenden Beschreibung bevorzugter Ausführungsformen der Erfindung sowie anhand der Zeichnungen.

Kurze Beschreibung der Zeichnungen

Fig. 1  zeigt einen Querschnitt im Bereich einer Längsnut zur Erzeugung einer Abkantung bei einem Laminat,

Fig. 2 und Fig. 3  das Laminat gemäß der Fig. 1 während eines Abkantvorgangs,

Fig. 4  ein Detail der Fig. 2 in einer vergrößerten Darstellung,

Fig. 5  einen im Querschnitt U-förmigen Bereich zur Befestigung eines plattenförmigen Flächenelements,

Fig. 6  den Bereich gemäß der Fig. 5 beim Abkantvorgang,

Fig. 7  ein Diagramm zur Verdeutlichung des von der Laminatdicke abhängigen Rückfederwinkels,

Fig. 8  eine Tabelle mit empirisch ermittelten Resultaten bei Abkanten verschiedener Laminate,

Fig. 9  einen Querschnitt im Bereich einer Nut des Laminats und

Fig. 10  einen Querschnitt im Bereich einer Wandbefestigung eines Wandpanelsystems, bei dem zwei plattenförmige Flächenelemente über ein Befestigungselement an einer Wand verankerbar sind.

Ausführungsformen der Erfindung

Gleiche Elemente beziehungsweise Elemente mit gleicher Funktion sind in den Figuren mit den gleichen Bezugsziffern versehen.

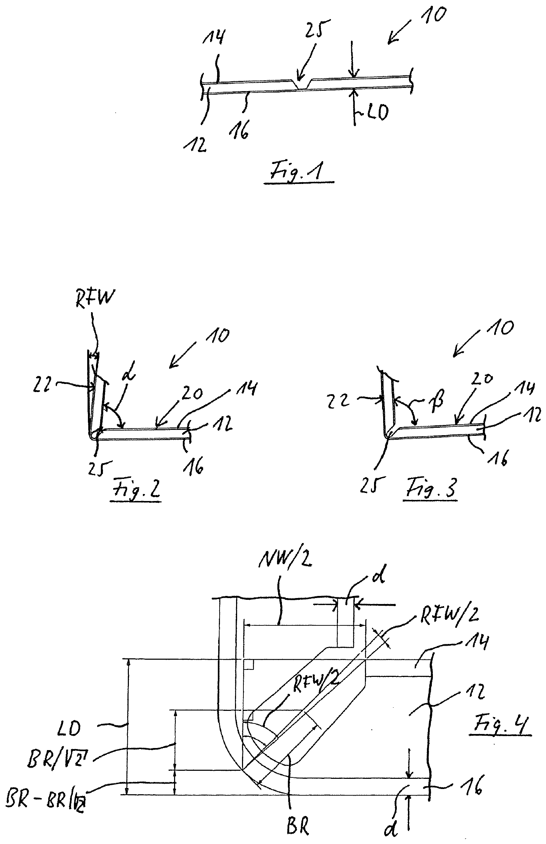

In der Fig. 1 bis 3 ist ein Laminat 10 gezeigt, das aus einer Kernschicht 12 und zwei, die Kernschicht 12 an gegenüberliegenden Seiten überdeckenden und mit der Kernschicht 12 auf an sich bekannte Art und Weise verbundenen Deckschichten 14, 16 besteht, wobei die beiden Deckschichten 14, 16 vorzugsweise identisch ausgebildet sind. Die Kernschicht 12 besteht aus einem Kunststoffmaterial, insbesondere in Form eines thermoplastischen Polymers, und die beiden Deckschichten 14, 16 aus Aluminium. Ein derartiges Laminat 10 ist beispielsweise unter der Bezeichnung ALUCOBOND® der Anmelderin bekannt.

Die Laminatdicke LD des Laminats 10 beträgt zwischen 1,2mm und 8mm, insbesondere zwischen 2mm und 6mm, während die Schichtdicke d der beiden Deckschichten 14, 16 jeweils zwischen 0,15mm und 1,05mm, insbesondere zwischen 0,2mm und 0,5mm beträgt.

Das soweit beschriebene plattenförmige Laminat 10 weist zum Ausbilden eines von einem Basisabschnitt 20 in einem Sollwinkel β, beispielhaft eines rechten Winkels, abkantbaren Abschnitts 22, welcher vorzugsweise rechteckförmig bzw. streifenförmig ausgebildet ist, eine in der Zeichenebene der Fig. 1 bis 3 senkrecht verlaufende Nut 25 auf. Die Geometrie der Nut 25 wird vorzugsweise mittels eines Formfräsers erzeugt.

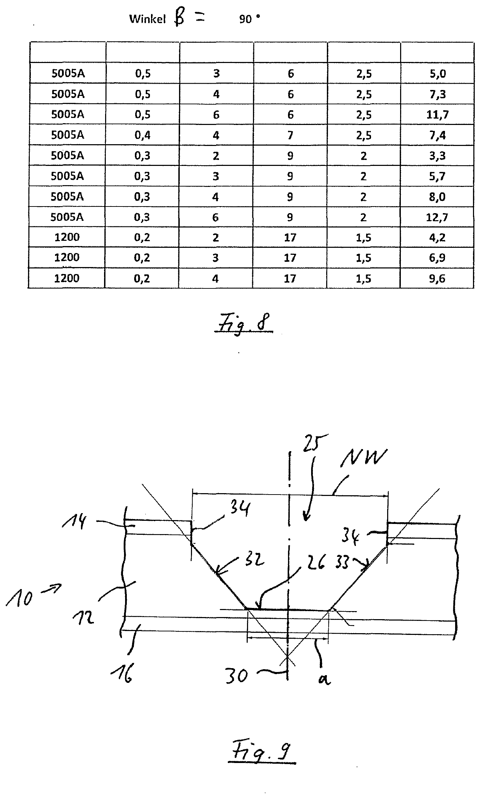

Die im Querschnitt vorzugsweise in etwa V- oder U-förmig ausgebildete Nut 25 ist, wie besonders deutlich in der Fig. 9 erkennbar ist, derart gestaltet, dass sie von der Deckschicht 14 bis in die Kernschicht 12 hineinreicht, bevorzugt derart, dass der Nutgrund 26 der Nut 25, der in etwa streifenförmig und eben ausgebildet ist, in einem (geringen) Abstand von der anderen Deckschicht 16 noch in der Kernschicht 12 endet. Insbesondere weist der Nutgrund 26 gemäß der Fig. 9 eine Breite a von 3mm auf, wobei im Bereich der Kernschicht 12 in einer Höhe von beispielhaft 0,3mm oberhalb der Deckschicht 16 verläuft.

Die Nut 25 weist zwei spiegelsymmetrisch zu einer Symmetrieebene 30 angeordnete, ebene Nutwände 32, 33 auf, die beispielhaft knapp unterhalb der (oberen) Deckschicht 14 enden, und dort in senkrecht zu den Deckschichten 14, 16 verlaufende Abschnitte 34 übergehen. Weiterhin weist die Nut 25 zwischen der ausgesparten oberen Deckschicht 14 eine Nutweite NW auf.

Zum Abkanten des Abschnitts 22 von dem Basisabschnitt 20 zur Erzielung des Sollwinkels β wird nunmehr auf die Fig. 2 und 3 verwiesen. Entsprechend der Fig. 2 wird der erste Abschnitt 22 zum Basisabschnitt 20 im Bereich der Nut 25 derart abgekantet beziehungsweise umgebogen, bis sich ein Biegewinkel α einstellt, der durch die Nutweite NW der Nut 25 begrenzt ist. Der Biegewinkel α ergibt sich dadurch, dass beim Erreichen des Biegewinkels α die beiden gegenüberliegenden Abschnitte der Deckschichten 14 des Abschnitts 22 und des Basisabschnitts 20 auf Anschlag aneinander anliegen. Entsprechend der Fig. 3 erfolgt daraufhin ohne weiteres Zutun ein elastisches Rückfedern zwischen dem Abschnitt 22 und dem Basisabschnitt 20 um einen laminatspezifischen Rückfederwinkel RFW derart, dass sich der gewünschte Sollwinkel β zwischen dem Basisabschnitt 20 und dem ersten Abschnitt 22 einstellt.

Zur Berechnung der Nutweite NW der Nut 25 unter Berücksichtigung des laminatspezifischen Rückfederwinkels RFW zur Erzielung des Sollwinkels β wird auf die Fig. 4 verwiesen, in der das Laminat 10 entsprechend der Fig. 3 in bereits rückgefedertem Zustand vergrößert dargestellt ist. Aus geometrischen Überlegungen ergibt sich dabei folgender Zusammenhang:

$$NW = 2 \times ((LD - (BR - (BR/\sqrt{2})) \times \tan(\beta/2 + (RFW/2))),$$

wobei BR den Biegeradius im Bereich der Biegekante zwischen dem Basisabschnitt 20 und dem Abschnitt 22 bedeutet.

Der laminatspezifische Rückfederwinkel RFW wurde anhand von Versuchen mit verschiedenen Laminaten 10 bei einem Sollwinkel β von 90° ermittelt. Die Ergebnisse hierzu sind in der Tabelle der Fig. 8 zusammengefasst. Die Versuche wurden mit den Laminaten 10 mit den angegebenen Legierungen, Schichtdicken d der Deckschichten 14, 16 und Laminatdicken LD durchgeführt. Die angegebenen Biegeradien BR haben sich dabei zwangsläufig ohne besondere Vorkehrungen beim manuellen Umbiegen bzw. Abkanten des Abschnitts 22 ergeben.

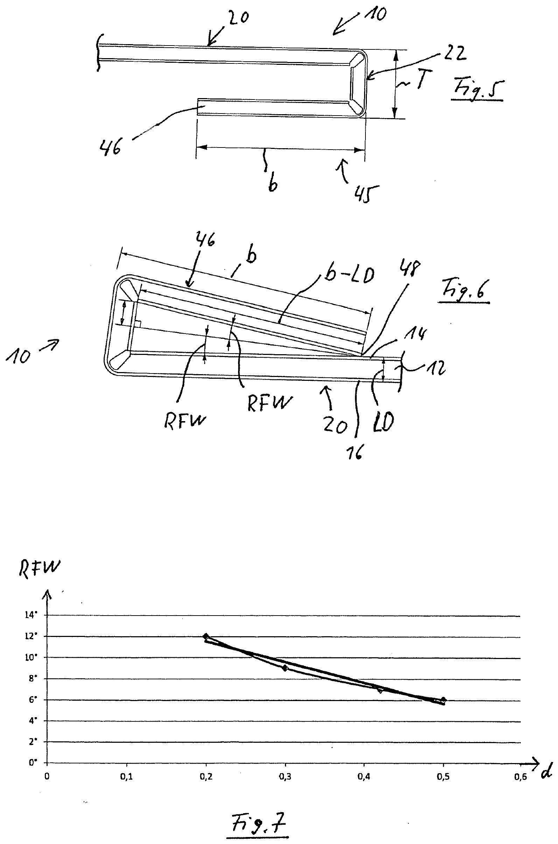

Weiterhin hat sich ergeben, dass der Rückfederwinkel RFW unabhängig vom Sollwinkel β ist, vorausgesetzt, der Sollwinkel β entspricht wenigstens dem Rückfederwinkel RFW. Auch wurde anhand von Versuchen festgestellt, dass der Rückfederwinkel RFW linear mit einer Erhöhung der Schichtdicke d der Deckschicht 14 abnimmt. Dieser Zusammenhang ist in dem Diagramm der Fig. 7 dargestellt.

Mittels der oben angegebenen Formel zur Berechnung der Nutweite NW der Nut 25 lässt sich somit ein gewünschter Sollwinkel β zwischen dem Abschnitt 22 und dem Basisabschnitt 20 manuell einfach und genau einstellen, wenn die fehlenden Angaben bzgl. des Rückfederwinkels RFW und des Biegeradius BR anhand der Tabelle aus der Fig. 8 für die angegebenen Laminate 10 entnommen werden.

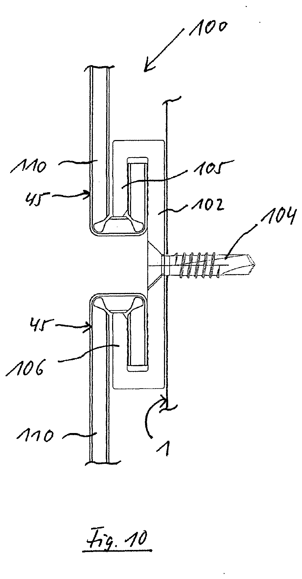

In der Fig. 5 ist ein im Querschnitt U-förmiger Bereich 45 des Laminats 10 gezeigt, der als Befestigungsabschnitt des Laminats 10 an einer Trägerkonstruktion dient, wie dies später noch im Zusammenhang mit der Fig. 10 erläutert wird. Der Bereich 45 zeichnet sich dadurch aus, dass sich an den Basisabschnitt 20 nicht nur der erste Abschnitt 22 anschließt, sondern, ausgehend von dem ersten Abschnitt 22 ein zweiter, parallel zum Basisabschnitt 20 verlaufender Abschnitt 46, wobei zwischen den beiden Abschnitten 22 und 46 ein rechter Winkel (90°) ausgebildet ist. Zwischen dem Basisabschnitt 20 und dem Abschnitt 22 ist eine Nut 25a ausgebildet, und zwischen den beiden Abschnitten 22 und 46 eine weitere Nut 25b. Die beiden Nuten 25a, 25b können hinsichtlich ihrer Geometrie identisch ausgebildet sein. Insbesondere weist die Nut 25a eine Nutweite NW auf, die ein rechtwinkliges Abkanten des Abschnitts 22 von dem Basisabschnitt 20, unter Berücksichtigung des Rückfederwinkels RFW, erlaubt bzw. entsprechend den Ausführungen zur Nut 25 berechnet wurde. Die Nut 25b weist demgegenüber entweder die gleiche Nutweite NW aus wie die Nut 25a, oder aber eine größere Nutweite NW.

Die Höhe T des Bereichs 45 im Bereich des Abschnitts 22 lässt sich in Abhängigkeit der Breite b des Abschnitts 46 im Zusammenhang mit der Darstellung der Fig. 6 aus geometrischen Gründen gemäß folgender Formel bestimmen:

$$T = 2 \times LD + 2 \times (\sin (RFW) \times (b - LD))$$

Hierbei wird beim Abkantvorgang der beiden Abschnitte 22, 46 der Abschnitt 46 auf der dem Abschnitt 22 abgewandten Seite mit einer Kante 48 gegen die Deckschicht 14 des Basisabschnitts 20 auf Kontakt umgelegt.

Zuletzt ist in der Fig. 10 ein Wandpanelsystem 100 gezeigt, das dazu ausgebildet ist, an einer Außenwand 1 eines Gebäudes befestigt zu werden. Das Wandpanelsystem 100 weist ein Befestigungsprofil 102 in Art einer Befestigungsleiste auf, die sich senkrecht zur Zeichenebene der Fig. 10 erstreckt. Mittels wenigstens eines Schraubelements 104 lässt sich das Befestigungsprofil 102 an der Wand 1 des Gebäudes verankern. Das Befestigungsprofil 102 ist beispielsweise als Extrusionsprofil aus Kunststoff oder aber als Fließpressbauteil aus Aluminium ausgebildet. Es weist an gegenüberliegenden Seiten einen Befestigungsabschnitt 105, 106 auf, der zur formschlüssigen Aufnahme der Bereiche 45 von zwei plattenförmigen Flächenelementen 110 ausgebildet sind, die aus jeweils einem Laminat 10, wie es oben beschrieben wurde, hergestellt sind.

Ergänzend wird erwähnt, dass die oben angeführten Formeln zur Berechnung der Nutweite NW bzw. zur Bestimmung der Höhe T des Abschnitts 22 am Bereich 45 im Rahmen von rechnergestützten Programmen Anwendung finden können. Dabei weisen die Programme Algorithmen zur Berechnung der einzelnen Werte unter Berücksichtigung der beispielsweise in der Tabelle der Fig. 8 angegebenen Werte auf, die in einem Datenspeicher abgespeichert bzw. hinterlegt sind.

Bezugszeichenliste

1    Außenwand

10    Laminat
12    Kernschicht
14    Deckschicht
16    Deckschicht
20    Basisabschnitt
22    Abschnitt
25    Nut
26    Nutgrund
30    Symmetrieebene
32    Nutwand
33    Nutwand
34    Abschnitt
45    Bereich
46    Abschnitt
48    Kante

100    Wandpanelsystem
102    Befestigungselement
104    Schraubelement
105    Befestigungsabschnitt

| | |
|---|---|
| 106 | Befestigungsabschnitt |
| 110 | Flächenelement |

| | |
|---|---|
| BR | Biegeradius |
| RFW | Rückfederwinkel |
| LD | Laminatdicke |
| d | Schichtdicke |
| a, b | Breite |
| T | Höhe |
| NW | Nutweite |

| | |
|---|---|
| $\alpha$ | Biegewinkel |
| $\beta$ | Sollwinkel |

**Patentansprüche**

1. Verfahren zum Abkanten eines Abschnitts (22) eines aus mehreren Schichten bestehenden, plattenförmigen Laminats (10) mit einer Laminatdicke (LD) von einem Basisabschnitt (20) zum Erzielen eines Sollwinkels ($\beta$) zwischen dem abgekanteten Abschnitt (22) und dem Basisabschnitt (20), wobei das Abkanten im Bereich einer zwischen dem Abschnitt (22) und dem Basisabschnitt (20) angeordneten, im Wesentlichen V- oder U-förmig ausgebildeten Nut (25) mit einem Biegeradius (BR) erfolgt, wobei die Nut (25) durch Materialabtrag im Bereich einer ersten Deckschicht (14) und einer Kernschicht (12) des aus der Kernschicht (12) und die Kernschicht (12) an gegenüberliegenden Seiten von Deckschichten (14, 16) überdeckten Laminats (10) erzeugt wird, wobei das Abkanten zunächst durch Umbiegen des Abschnitts (22) um einen Biegewinkel (a) erfolgt, der größer ist als der Sollwinkel ($\beta$), derart, dass die die Nut (25) begrenzenden Bereiche des Materials der ersten Deckschicht (14) auf Anschlag aneinander anliegen, wobei nach dem Abkanten der Abschnitt (22) um einen Rückfederwinkel (RFW) unter Verringerung des Biegewinkels (a) rückfedert, und wobei eine Nutweite (NW) der Nut (25) nach der Formel

$$NW = 2 \times ((LD - (BR - (BR/\sqrt{2}))) \times \tan (\beta/2 + (RFW/2)))$$

berechnet wird.

2. Verfahren zum Abkanten eines im Querschnitt U-förmigen Bereichs (45) bei einem aus mehreren Schichten bestehenden, plattenförmigen Laminat (10) mit einer Laminatdicke (LD), bei dem von einem Basisabschnitt (20) ein erster Abschnitt (22) und ein zweiter Abschnitt (46) im Bereich zweier parallel zueinander angeordneter, vorzugsweise identisch und im Wesentlichen V- oder U-förmig ausgebildeter Nuten (25a, 25b) mit einer Nutweite (NW) abgekantet werden, wobei die Nuten (25a, 25b) durch Materialabtrag im Bereich einer ersten Deckschicht (14) und einer Kernschicht (12) des aus der Kernschicht (12) und die Kernschicht (12) an gegenüberliegenden Seiten von Deckschichten (14, 16) überdeckten Laminats (10) erzeugt werden, wobei der zweite Abschnitt (46) mit der dem ersten Abschnitt (22) gegenüberliegenden Kante (48) beim Abkanten gegen die ihn zugewandte Seite des Basisabschnitts (20) in Kontakt gebracht wird, wobei nach dem Abkanten die beiden von dem Basisabschnitt (20) abgekanteten Abschnitte (22, 46) jeweils um einen Rückfederwinkel (RFW) entgegen der Richtung des ursprünglichen Biegewinkels rückfedern, wobei der von dem Basisabschnitt (20) abgekantete erste Abschnitt (22) und der von dem ersten Abschnitt (22) abgekantete zweite Abschnitt (46) noch dem Rückfedern jeweils um 90° zueinander angeordnet sind, und wobei die Höhe (T) des Querschnitts im Bereich (45) des ersten Abschnitts (22) bei einer gegebenen Breite (b) des zweiten Abschnitts (46) nach der Formel

$$T = 2 \times LD + 2 \times (\sin (RFW) \times (b - LD))$$

berechnet wird.

3. Verfahren nach Anspruch 1 oder 2,
**dadurch gekennzeichnet,**
**dass** die Größe des Rückfederwinkels (RFW) des Laminats (10) und ggf. die Größe des Biegeradius (BR) aus einer empirisch ermittelten Tabelle ermittelt wird/werden.

**4.** Verfahren nach einem der Ansprüche 1 bis 3,
**dadurch gekennzeichnet,**
**dass** die Nut (25; 25a, 25b) durch einen Formfräser erzeugt wird.

**5.** Laminat (10) zum Durchführen eines Verfahrens nach einem der Ansprüche 1 bis 4, aufweisend eine Kernschicht (12) aus einem thermoplastischen Polymer, das an gegenüberliegenden Seiten von jeweils einer aus Metall bestehenden Deckschicht (14, 16) überdeckt ist, und mit wenigstens einer geradlinig ausgebildeten Nut (25; 25a, 25b), die einen Basisabschnitt (20) von einem abkantbaren Abschnitt (22) oder einen ersten Abschnitt (22) von einem zweiten Abschnitt (46) trennt, wobei die wenigstens eine Nut (25; 25a, 25b) im Bereich der ersten Deckschicht (14) sowie der Kernschicht (12) ausgebildet ist, wobei die wenigstens eine Nut (25; 25a, 25b) maximal bis zu dem Bereich der zweiten Deckschicht (16), vorzugsweise in einem Abstand von der zweiten Deckschicht (16) endend, ausgebildet ist, und wobei die wenigstens Nut (25; 25a, 25b) spiegelsymmetrisch zu einer senkrecht zur Ebene des Laminats (10) verlaufenden Symmetrieebene (30) ausgebildet ist.

**6.** Laminat nach Anspruch 5,
**dadurch gekennzeichnet,**
**dass** die beiden Deckschichten (14, 16) aus Aluminium mit einer Schichtdicke zwischen 0,15mm und 1,05mm, insbesondere zwischen 0,2mm und 0,5mm, bestehen.

**7.** Laminat nach Anspruch 6,
**dadurch gekennzeichnet,**
**dass** das Laminat (10) eine Laminatdicke (LD) zwischen 1,2mm und 8mm, insbesondere zwischen 2mm und 6mm, aufweist.

**8.** Laminat nach Anspruch 6 oder 7,
**dadurch gekennzeichnet,**
**dass** der Biegeradius (BR) zwischen 1mm und 3,5mm, insbesondere zwischen 1,5mm und 2,5mm, beträgt.

**9.** Laminat nach einem der Ansprüche 6 bis 8,
**dadurch gekennzeichnet,**
**dass** die wenigstens eine Nut (25; 25a, 25b) einen insbesondere flachen oder gewölbten Nutgrund (26) mit einer Nutbreite von 2mm bis 4 mm, insbesondere 2,8mm bis 3,2mm, aufweist.

**10.** Wandpanelsystem (100), aufweisend wenigstens ein plattenförmiges Flächenelement (110) aus einem Laminat (10), das nach einem der Ansprüche 5 bis 9 ausgebildet ist und/oder bei dem wenigstens ein Abschnitt (22, 46) nach einem Verfahren nach einem der Ansprüche 1 bis 4 abgekantet ist,
**dadurch gekennzeichnet, dass** das Flächenelement (110) im Bereich des abgekanteten Abschnitts (22, 46) mit einem Befestigungselement (102) zur Befestigung an einer Wand (1) formschlüssig verbindbar ist.

**11.** Computerprogrammprodukt, insbesondere Berechnungsprogramm zum Durchführen der Berechnung einer erforderlichen Nutweite (NW) oder der Geometrie eines im Querschnitt U-förmigen Bereichs (45) nach einem Verfahren nach einem der Ansprüche 1 bis 4, umfassend einen Algorithmus und einen Datenspeicher mit laminatspezifischen Werten, insbesondere des Rückfederwinkels (RFW) und/oder des Biegeradius (BR).

14    25    10

25 ↓ LO

12    16

_Fig.1_

RFW

22    d    10

20    14

12

25    _Fig.2_    16

22    β    10

20    14

12

25    _Fig.3_    16

NW/2    d

RFW/2

14

RFW/2    12

LO

BR/√2'

BR-BR/√2    _Fig.4_

BR    d    16

Fig.5

Fig.6

Fig.7

Winkel $\beta$ = 90 °

| | | | | | |
|---|---|---|---|---|---|
| 5005A | 0,5 | 3 | 6 | 2,5 | 5,0 |
| 5005A | 0,5 | 4 | 6 | 2,5 | 7,3 |
| 5005A | 0,5 | 6 | 6 | 2,5 | 11,7 |
| 5005A | 0,4 | 4 | 7 | 2,5 | 7,4 |
| 5005A | 0,3 | 2 | 9 | 2 | 3,3 |
| 5005A | 0,3 | 3 | 9 | 2 | 5,7 |
| 5005A | 0,3 | 4 | 9 | 2 | 8,0 |
| 5005A | 0,3 | 6 | 9 | 2 | 12,7 |
| 1200 | 0,2 | 2 | 17 | 1,5 | 4,2 |
| 1200 | 0,2 | 3 | 17 | 1,5 | 6,9 |
| 1200 | 0,2 | 4 | 17 | 1,5 | 9,6 |

Fig. 8

Fig. 9

Fig. 10

Europäisches
Patentamt

European
Patent Office

Office européen
des brevets

**EUROPÄISCHER RECHERCHENBERICHT**

**Nummer der Anmeldung**

**EP 22 15 7987**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2018 126669 A1 (3A COMPOSITES GMBH [DE]) 30. April 2020 (2020-04-30) | 5-7,10 | INV. B21D11/08 |
| Y | * Absatz [0025] – Absatz [0031]; | 8,9 | B32B15/08 |
| A | Abbildungen 1,2,5 * | 1-4,11 | B32B15/20 E04F13/08 |
| | ----- | | B29C53/06 |
| X | CH 687 552 A5 (ALUSUISSE LONZA SERVICES AG [CH]) 31. Dezember 1996 (1996-12-31) | 5-7,10 | E04F13/12 |
| Y | * Spalte 1, Zeile 65 – Spalte 2, Zeile 23; | 8,9 | |
| A | Abbildungen 1-5 * | 1-4,11 | |
| | ----- | | |
| X | WO 2015/179982 A1 (CARTER FABRICATING INC [CA]) 3. Dezember 2015 (2015-12-03) | 1,10 | |
| Y | * Zusammenfassung; Abbildungen 5A-C * | 8,9 | |
| | ----- | | |
| X | US 10 322 843 B2 (DREW FOAM COMPANIES INC [US]) 18. Juni 2019 (2019-06-18) | 5 | |
| A | * Zusammenfassung; Abbildungen 1-3 * | 11 | |
| | ----- | | |
| A | DE 10 2009 022812 A1 (BLANCO GMBH & CO KG [DE]) 2. Dezember 2010 (2010-12-02) | 1-4,11 | |
| | * Absatz [0007]; Abbildungen 4,5 * | | |
| | ----- | | |

**RECHERCHIERTE SACHGEBIETE (IPC)**

B21D
B32B
E04F
B29C

Der vorliegende Recherchenbericht wurde für alle Patentansprüche erstellt

| Recherchenort | Abschlußdatum der Recherche | Prüfer |
|---|---|---|
| München | 11. August 2022 | Khera, Daljit |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
   Dokument

**ANHANG ZUM EUROPÄISCHEN RECHERCHENBERICHT
ÜBER DIE EUROPÄISCHE PATENTANMELDUNG NR.**

EP 22 15 7987

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-08-2022

| Im Recherchenbericht angeführtes Patentdokument | Datum der Veröffentlichung | Mitglied(er) der Patentfamilie | Datum der Veröffentlichung |
|---|---|---|---|
| DE 102018126669 A1 | 30-04-2020 | AU 2019366769 A1 | 20-05-2021 |
| | | CN 112912573 A | 04-06-2021 |
| | | DE 102018126669 A1 | 30-04-2020 |
| | | EP 3870772 A1 | 01-09-2021 |
| | | US 2022064962 A1 | 03-03-2022 |
| | | WO 2020084143 A1 | 30-04-2020 |
| CH 687552 A5 | 31-12-1996 | KEINE | |
| WO 2015179982 A1 | 03-12-2015 | CA 2950786 A1 | 03-12-2015 |
| | | US 2015345152 A1 | 03-12-2015 |
| | | WO 2015179982 A1 | 03-12-2015 |
| US 10322843 B2 | 18-06-2019 | US 2018155076 A1 | 07-06-2018 |
| | | WO 2018102140 A1 | 07-06-2018 |
| DE 102009022812 A1 | 02-12-2010 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018126669 A1